# EUROPEAN PATENT APPLICATION

(11) **EP 4 105 097 A1**
(43) Date of publication of application: **21.12.2022**
(21) Application number: 22172417.2
(22) Date of filing: 09.05.2022
(51) Int. Cl.: B61D 45/00, B60P 7/12, B60P 7/15

(54) **LOAD LOCKING DEVICE ON CONTAINERS, WAGONS GOODS OR OTHER VEHICLES**

(30) Priority: 10.05.2021 PL 13004221 U
(71) Applicant: Wagony Swidnica sp. z o.o., 58-100 Swidnica (PL)
(72) Inventor: Pazdzierniak, Przemyslaw, 58-160 Swidnica (PL); Konstanty, Piotr, 58-100 Wilków (PL); Draszkiewicz, Wojciech, 58-260 Bielawa (PL); Koziol , Michal, 58-100 Swidnica (PL); Studzinski, Dionizy, 58-100 Swidnica (PL); Szmidt, Tomasz, 58-100 Swidnica (PL)
(74) Representative: Bartula-Toch, Marta

(57) **Abstract**

A device for locking loads on containers, freight wagons or other vehicles has two guiding tubes (3) and (4) coaxially seated on both sides in a frame (12) and two drive screws (5) and (6) parallel thereto, respectively, rotatably bearing seated in the frame (12), mutually coupled by a differential gear (7) which is connected via a toothed gear (8) to a drive shaft (10) rotatably bearing seated in the frame (12) and parallel to the tube (4) and the screw (6). The drive shaft (10) is also connected via the toothed gear (8) to a drive shaft (9) which is bearing seated in the frame (12), wherein the opposite ends of the shafts (9) and (10), which extend beyond the frames, are provided with shaped tips for connecting a drive unit (11).

## Description

The object of the invention is a device for locking loads in the transverse direction on containers, freight wagons or other vehicles, designed in particular for locking coil-shaped loads.

Technical solutions known to be in use, designed for locking loads, for example coils of sheet metal, on railway wagons, have locking arms that can move and rotate along a guiding tube. The locking arms prevent the cylindrical load from moving transversely. The arms can be moved and locked manually. Such solutions require climbing onto the wagon in the loading area. Solutions are also known that allow the arms to be moved and locked from the track level. Each locking arm is moved and locked individually. For this reason, securing the load must be done by two people or one person must work on both sides of the wagon.

Polish patent PL222981 (B1) relates to a device for locking loads on freight wagons, having a pressure arm seated pivotally and slidably on a guiding tube, to which a drive screw is arranged in parallel which is provided with a shaped tip and a handwheel fixed thereto. On the drive screw, in the notch of the pressure arm, there is a threaded part of the driver in the form of a half-nut with a control cam. In the lower part of the driver, there is a notch in the shape of an inverted U letter, the roof of which is threaded and located between arms blocking its rotation on the guide. The upper part of the driver is formed into a hook, located on the control cam provided with a control cam lever.

From the Slovak utility model specification No. 6092, there is known a mechanism for securing a cylindrical load, the essential parts of which are stanchions, guiding tubes, nuts with drivers cooperating with rotating threaded spindles which move couplings, chains and sprockets seated on a shaft.

The load-locking device is equipped with two pressure arms seated pivotally and slidingly on a guiding tube, parallel to the screw along which threaded drivers connected to the pressure arms move. The essence of the solution according to the invention is that the device has two guiding tubes coaxially seated on both sides in inner support elements and outer support elements and two drive screws parallel thereto, respectively, rotatably bearing seated in the inner support elements and the outer support elements, which screws are mutually coupled by a differential gear which is connected via a toothed gear to a drive shaft rotatably bearing seated in the inner support elements and the outer support elements and parallel to the tube and the screw. The shaft is also connected via the toothed gear to a second drive shaft which is bearing seated in the inner support elements and the outer support elements. The opposite ends of the two drive shafts extend beyond the outer support elements on both sides and are provided with shaped tips for connecting a drive unit.

Preferably, the drive screws and drivers are provided with self-locking threads.

In a preferred embodiment, the differential gear housing is constituted by the internal support elements of the load-locking device.

In a preferred embodiment, the toothed gearwheels are seated on the drive shafts.

Preferably, the drive unit is a crank.

Preferably, the drive unit is a handwheel.

Preferably, the drive unit is a portable electric drive device.

The device for locking loads on vehicles allows the load to be locked quickly and effectively against transverse movement on the loading surface of a transport vehicle, especially coil-shaped loads.

In the case of asymmetrical load distribution, the device ensures that when one locking arm is brought into contact with the load, the other locking arm does not stop and continues to move until it comes into contact with the load.
The load-locking device is operated from one side of the vehicle.

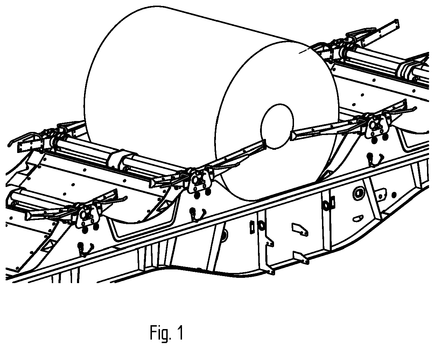

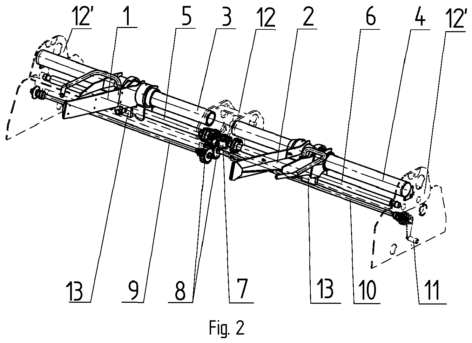

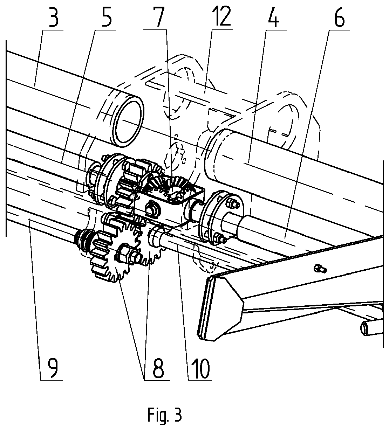

The solution according to the invention is illustrated in the drawing, where Fig. 1 shows a view of a device locking the movement of sheet metal coils in the transverse direction of the wagon, Fig. 2 - a load-locking device, and Fig. 3 - a screw drive mechanism.

The device for locking loads on freight wagons has pressure arms 1 and 2 seated pivotally and slidingly on two coaxially-arranged guiding tubes 3 and 4 seated on both sides in inner support elements 12 and outer support elements 12'. In parallel to the guiding tubes 3 and 4, there are screws 5 and 6 with which threaded drivers, mechanically connected to the pressure arms 1 and 2, cooperate. The screws 5 and 6 are coupled to each other via a differential gear 7. The differential gear 7 is connected by means of a toothed gear 8 to a drive shaft 9 located in parallel to the screw 3. A drive shaft 10 located in parallel to the screw 6 is connected to a drive shaft 9 by means of the toothed gear 8. The opposite ends of the drive shafts 9 and 10 extend outwards beyond the outer support elements 12' and are provided with shaped tips to which drive units 11 such as a crank, a handwheel or a portable electric drive device are attached. These are used to rotate the drive screws 5 and 6 through the differential gear 7 and the drive shafts 9 or 10 which drive it. The threaded drive screws 5 and 6 cooperate with the threaded drivers connected to the pressure arms 1 and 2.

When loading, the pressure arms 1 and 2 have to be moved to the extreme outer position on the wagon. Rotation of the drive shaft 9 or 10 by means of a crank 11, a handwheel or a portable electric drive device drives the differential gear, which causes the drive screws 5 and 6 to rotate, which in turn moves the threaded drivers along the drive screws 5 and 6 and pushes or pulls the pressure arms 1 and 2 towards or away from the load. When one of the two arms being moved comes into contact with the load to be locked, the other arm continues to move until it comes into contact with the load. The drive screws 4 and 6 and the threaded drivers have self-locking threads, so the pressure arms 1 and 2 cannot move on their own and, when pressed against the load, prevent the load from moving. Before unloading, the pressure arms 1 and 2 have to be moved away from the load to their extreme outer positions by means of the crank 11, the handwheel or the portable electric drive device to facilitate the unloading.

## Claims

1. A device for locking loads on containers, freight wagons or other vehicles, provided with at least two pressure arms (1) and (2) for lateral support of the load, seated pivotally and slidably on guiding tubes (3) and (4) which are parallel to drive screws (5) and (6), along which threaded drivers (13) connected to the pressure arms (1) and (2) move,**characterised in that** it has two guiding tubes (3) and (4) coaxially seated on both sides in inner support elements (12) and outer support elements (12'), and two drive screws (5) and (6) parallel thereto, respectively, rotatably bearing seated in the inner support elements (12) and the outer support elements (12'), which screws (5) and (6) are mutually coupled by a differential gear (7) which is connected via a toothed gear (8) to a drive shaft (10) rotatably bearing seated in the inner support elements (12) and the outer support elements (12') and parallel to the tube (4) and the screw (6), which shaft is also connected via the toothed gear (8) to a drive shaft (9) which is bearing seated in the inner support elements (12) and the outer support elements (12'), wherein the opposite ends of the shafts (9) and (10), which extend beyond the outer support elements (12') on both sides, are provided with shaped tips for connecting a drive unit (11).

2. The device according to claim 1, **characterised in that** the drive screws (5) and (6) and the drivers (13) are provided with self-locking threads.

3. The device according to claim 1 or 2, **characterised in that** the differential gear (7) housing is constituted by the inner support elements (12) of the load-locking device.

4. The device according to claim 1 or 2, or 3, **characterised in that** the toothed gear wheels are seated on the drive shafts (9) and (10).

5. The device according to claim 1 or 2, or 3, or 4, **characterised in that** the drive unit (11) is a crank.

6. The device according to claim 1 or 2, or 3, or 4, **characterised in that** the drive unit (11) is a handwheel.

7. The device according to claim 1 or 2, or 3, or 4, **characterised in that** the drive unit (11) is a portable electric drive device.
